# EUROPÄISCHE PATENTSCHRIFT

(11) **EP 1 035 715 B1**
(45) Veröffentlichungstag und Bekanntmachung des Hinweises auf die Patenterteilung: **02.05.2007**
(21) Anmeldenummer: 00104256.3
(22) Anmeldetag: 01.03.2000
(51) Int. Cl.: H04M 3/42, H04Q 3/00, H04Q 3/62

(54) **Verfahren zum Bereitstellen von Leistungsmerkmalen über ein Kommunikationsnetz**
Method for providing service features over a communications network
Méthode pour délivrer des services par un réseau de communications

(30) Priorität: 05.03.1999 DE 19909774
(43) Veröffentlichungstag der Anmeldung: 13.09.2000
(73) Patentinhaber: SIEMENS AKTIENGESELLSCHAFT, 80333 München (DE)
(72) Erfinder: Schönfeld, Norbert, 44145 Dortmund (DE); Spiel, Matthias, 59439 Holzwickede (DE)

(56) Entgegenhaltungen:
- EP-A- 0 584 537
- EP-A- 0 641 140
- DE-A- 4 108 088
- US-A- 5 764 639

## Beschreibung

Aufgrund einer zunehmenden zeitlichen und räumlichen Flexibilisierung der Arbeitsbedingungen nimmt die Anzahl derjenigen Mitarbeiter, die ihre beruflichen Aufgaben nicht an ihrem Arbeitsplatz im Unternehmen erledigen ständig zu. Aus "Das virtuelle Büro", telcomreport, Heft 4, 1997, Siemens AG Berlin und München, ist bekannt, daß für ein effektives Erledigen der Aufgaben außerhalb des Unternehmens ein Zugriff auf die im lokalen Kommunikationsnetz des Unternehmens angebotenen Kommunikations-Leistungsmerkmale unabhängig vom Aufenthaltsort des Mitarbeiters notwendig ist. Zu diesen Leistungsmerkmalen zählen die zusätzlich zu den standardmäßig in einem ISDN-Kommunikationsnetz bereitgestellten Leistungsmerkmale, wie beispielsweise Einrichten einer Konferenzschaltung, automatischer Rückruf, Signalisieren eines Nachrichteneingangs oder Rufgruppe.

Um an einem, über ein Kommunikationsnetz mit einer Kommunikationsanlage verbundenen Endgerät - im weiteren als externes Kommunikationsendgerät bezeichnet - von der Kommunikationsanlage realisierte Leistungsmerkmale in gleicher Weise wie an einem internen Endgerät zur Verfügung stellen zu können, wurde in der deutschen Patentanmeldung mit dem Aktenzeichen 198 083 68.8 bereits ein Verfahren vorgeschlagen, durch das endgeräteorientierte Signalisierungsinformationen, wie sie üblicherweise im Rahmen eines Signalisierungsprotokolls zwischen der Kommunikationsanlage und an dieser angeschlossenen internen Endgeräten übermittelt werden, über eine Datenverbindung - beispielsweise über einen Nutzdatenkanal (B-Kanal) einer ISDN-Verbindung - zwischen der Kommunikationsanlage und dem externen Kommunikationsendgerät übermittelt werden. Voraussetzung ist hierbei, daß das externe Kommunikationsendgerät eine übermittelte endgeräteorientierte Signalisierungsinformation interpretieren und entsprechend z.B. in eine Steuerinformation für eine LED oder ein Endgeräte-Display umsetzen kann

Da derartige endgeräteorientierte Signalisierungsinformationen in der Regel auch in Zeiten, in denen zwischen dem externen Kommunikationsendgerät und der Kommunikationsanlage keine sprachorientierten Nutzdaten übermittelt werden sehr häufig ausgetauscht werden - beispielsweise eine Anzeige eines ankommenden Rufes an einem Kommunikationsendgerät in einer Rufgruppe - muß die Datenverbindung zwischen der Kommunikationsanlage und dem externen Kommunikationsendgerät für eine Übermittlung der endgeräteorientierten Signalisierungsinformationen auch während diesen Zeiten bestehen bleiben, was zu einer hohen Gebührenbelastung führt.

Zur Lösung dieses Problems ist bereits aus der US-Patentschrift US 5,764,639 ein Verfahren zur Bereitstellung von kommunikationsanlagen-internen Leistungsmerkmalen bzw. von internen Daten an einer externen Einrichtung bekannt, bei dem für eine Datenübermittlung zwischen der externen Einrichtung und einem "virtual presence server" eine Verbindung über ein Kommunikationsnetz aufgebaut wird. In Fällen, in denen innerhalb einer bestimmten Zeitspanne keine Daten über die Verbindung übermittelt werden, wird die Verbindung abgebaut. Sollen erneut Daten zwischen der externen Einrichtung und dem "virtual presence server" ausgetauscht werden, wird die gesamte Verbindung erneut aufgebaut.

Der vorliegenden Erfindung liegt die Aufgabe zugrunde, ein alternatives Verfahren anzugeben, durch welches von einer Kommunikationsanlage realisierte Leistungsmerkmale an einem externen Kommunikationsendgerät bereitgestellt werden können.

Die Lösung dieser Aufgabe erfolgt erfindungsgemäß mit den Merkmalen des Patentanspruchs 1.

Zum besseren Verständnis der beim sogenannten 'Teleworking'-Konzept ablaufenden Verfahrensschritte erscheint es erforderlich zunächst noch einmal auf bekannte Prinzipien näher einzugehen.

Wird an einem externen Kommunikationsendgerät durch einen Teilnehmer eine sogenannte 'Teleworking'-Anmeldung eingeleitet, so wird über ein, die Kommunikationsanlage mit dem externen Kommunikationsendgerät verbindendes Kommunikationsnetz eine Datenverbindung zwischen der Kommunikationsanlage und dem externen Kommunikationsendgerät aufgebaut. Eine Anmeldung an der Kommunikationsanlage erfolgt dabei beispielsweise durch Eingabe einer bestimmten kommunikationsanlagen-internen Rufnummer am externen Kommunikationsendgerät durch den Teilnehmer.

Für eine Identifizierung des externen Kommunikationsendgerätes an der Telekommunikationsanlage wird die Rufnummer des externen Kommunikationsendgerätes im Kommunikationsnetz und für eine Authentifizierung des Teilnehmers wird eine zugehörige teilnehmerindividuelle Kennummer PIN (Private Identification Number) - und alternativ oder additiv ein teilnehmerindividuelles Paßwort - über die Datenverbindung an die Kommunikationsanlage übermittelt. Anhand einer in der Kommunikationsanlage gespeicherten Liste, welche die für das 'Teleworking' berechtigten Rufnummern enthält, findet eine Überprüfung der Anmeldung des externen Kommunikationsendgerätes an der Kommunikationsanlage statt. Hat die Überprüfung die Anmeldung bestätigt, wird dem externen Kommunikationsendgerät von der Kommunikationsanlage eine kommunikationsanlagen-interne Rufnummer zugewiesen. Gleichzeitig werden alle an die kommunikationsanlagen-interne Rufnummer gerichteten Rufe an das externe Kommunikationsendgerät weitergeleitet.

Zusätzlich zu den übermittelten Nutzdaten werden von der Kommunikationsanlage an die kommunikationsanlagen-interne Rufnummer zu übermittelnde endgeräteorientierte Signalisierungsinformationen über einen Nutzdatenkanal der Datenverbindung an das externe Kommunikationsendgerät übermittelt. Die endgeräteorientierten Signalisierungsinformationen basieren beispielsweise auf einem kommunikationsanlagen-internen Signalisierungsprotokoll, wie es üblicherweise beim Signalisierungsaustausch zwischen internen Kommunikationsendgeräten und der Kommunikationsanlage zur Verfügung steht. Durch die Übermittlung von, auf dem internen Signalisierungsprotokoll basierenden endgeräteorientierten Signalisierungsinformationen an das externe Kommunikationsendgerät werden einem Teilnehmer am externen Kommunikationsendgerät alle von der Kommunikationsanlage realisierten Leistungsmerkmale in gleicher Weise, wie an einem internen Kommunikationsendgerät zur Verfügung gestellt.

Eine Übermittlung von endgeräteorientierten Signalisierungsinformationen vom externen Kommunikationsendgerät - seine Anmeldung an der Kommunikationsanlage vorausgesetzt - zur Kommunikationsanlage erfolgt in gleicher Weise in umgekehrter Richtung.

Ein wesentlicher Vorteil der Erfindung besteht nun darin, daß durch eine Übermittlung von endgeräteorientierten Signalisierungsinformationen über einen Signalisierungskanal einer, ein externes Kommunikationsendgerät mit einer Kommunikationsanlage verbindenden Datenverbindung, nach Beendigung einer Nutzdatenübermittlung, die Nutzdaten-Verbindung über einen Nutzdatenkanal der Datenverbindung abgebaut werden kann und somit in Zeiten in denen keine Nutzdatenübermittlung zwischen dem externen Kommunikationsendgerät mit der Kommunikationsanlage erfolgt, keine Gebühren für die Übermittlung der endgeräteorientierten Signalisierungsinformationen anfallen.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Überprüfung einer Berechtigung zum Anmelden eines externen Kommunikationsendgerätes an der Kommunikationsanlage anhand von teilnehmerbezogenen Daten - die beispielsweise eine teilnehmerindividuelle Identifikationsnummer und alternativ oder additiv ein teilnehmerindividuelles Paßwort umfassen - ein unauthorisierter Zugriff auf kommunikationsanlagen-interne Daten unterbindbar ist.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen 'Teleworking'-Konzept beteiligten wesentlichen Funktionseinheiten;
- Fig. 2:: ein Ablaufdiagramm zur Veranschaulichung der bei einem Anmelden eines externen Kommunikationsendgerätes an einer Kommunikationsanlage ablaufenden wesentlichen Verfahrensschritte;
- Fig. 3:: ein Ablaufdiagramm zur Veranschaulichung der nach dem Anmelden ablaufenden wesentlichen Verfahrensschritte.

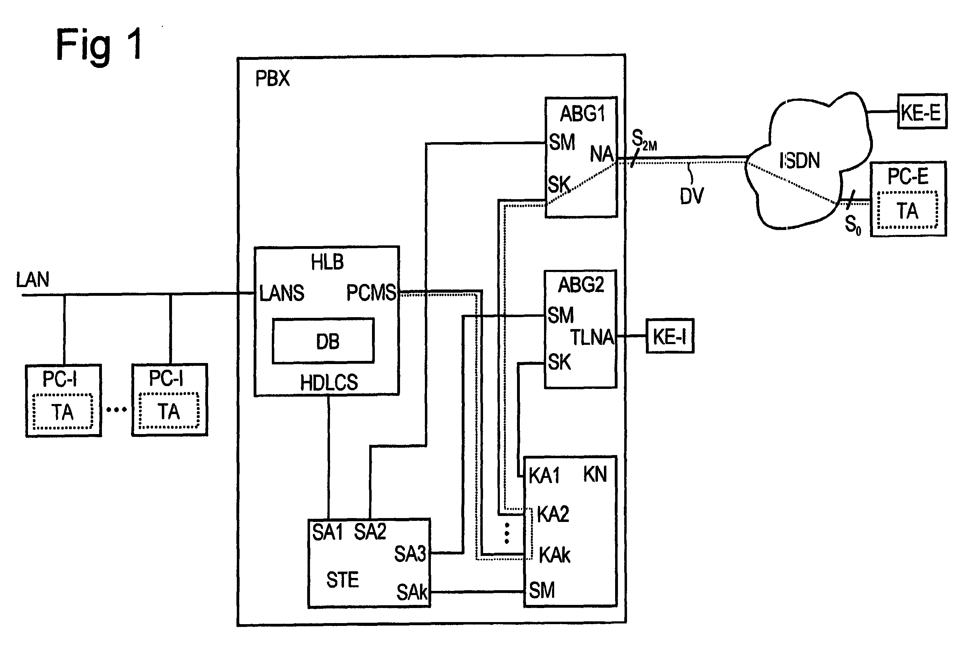

Fig. 1 zeigt eine schematische Darstellung einer Kommunikationsanlage PBX mit einer in dieser angeordneten, als Teilnehmer-Anschlußeinheit ausgestalteten Baugruppe - im weiteren mit Teleworking-Baugruppe HLB bezeichnet. Die Kommunikationsanlage PBX weist weitere Teilnehmer- bzw. Netzanschlußeinheiten - beispielhaft sind eine erste und eine zweite Anschlußeinheit ABG1, ABG2 dargestellt - zum Anschluß von Kommunikationsendgeräten an die Kommunikationsanlage PBX auf. Des weiteren beinhaltet die Kommunikationsanlage PBX ein mehrere bidirektionale, Zeitmultiplex-orientierte Koppel-Anschlüsse KA1,...,KAk aufweisendes Koppelfeldmodul KN, wobei die Zeitmultiplex-orientierten Koppel-Anschlüsse KA1,...,KAk als PCM-Anschlüsse (Puls Code Modulation) - auch als PCM-Highways, Speech-Highways oder S_{2M}-Anschlüsse bezeichnet - ausgestaltet sind. Jeder PCM-Highway umfaßt im allgemeinen zum einen 30 Nutzkanäle, welche jeweils als ISDN-orientierte B-Kanäle (Integrated Services Digital Network) mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist. Über den Koppel-Anschluß KAk ist das Koppelfeldmodul KN mit einer bidirektionalen, Zeitmultiplex-orientierten PCM-Schnittstelle PCMS der Teleworking-Baugruppe HLB verbunden. Über weitere PCM-Anschlüsse KA1, KA2 ist das Koppelfeldmodul KN jeweils mit einem bidirektionalen, Zeitmultiplex-orientierten Anschluß SK der ersten und der zweiten ABG1, ABG2 verbunden.

Des weiteren ist in der Kommunikationsanlage PBX eine mehrere Steueranschlüsse SA1,...,SAk aufweisende Steuereinheit STE angeordnet. Über einen Steueranschluß SAk ist die Steuereinheit STE mit einem Steuereingang SM des Koppelfeldmoduls KN verbunden. Über weitere Steueranschlüsse SA1,...,SA3 ist die Steuereinheit STE zum einen mit einer auf der Teleworking-Baugruppe HLB angeordneten HDLC-Schnittstelle HDLCS (High Level Data Link Control) und zum anderen mit Steueranschlüssen SM der ersten und der zweiten Anschlußeinheit ABG1, ABG2 verbunden.

An einem Netzanschluß NA - beispielsweise einem bidirektionalen, Zeitmultiplex-orientierten S_{2M}-Anschluß - der ersten Anschlußeinheit ABG1 ist ein ISDN-orientiertes Kommunikationsnetz ISDN angeschlossen. An das ISDN-orientierte Kommunikationsnetz ISDN sind beispielhaft eine externe Datenverarbeitungseinrichtung PC-E (z.B. ein sogenannter Personal Computer oder eine sogenannte Workstation) und ein externes Kommunikationsendgerät KE-E angeschlossen. Die externe Datenverarbeitungseinrichtung PC-E weist eine in Software implementierte (durch die gepunktete Linie angedeutet) Telefonanwendung TA auf. Durch eine derartige Telefonanwendung TA stehen einem Benutzer der externen Datenverarbeitungseinrichtung PC-E alle Funktionsmerkmale - häufig auch als 'Features' bezeichnet - eines herkömmlichen Telefons zur Verfügung. In der Literatur wird eine derartige Anwendung deshalb häufig auch als virtuelles Telefon bezeichnet. Die Verwendung einer derartige Telefonanwendung TA setzt jedoch die Ausgestaltung einer Datenverarbeitungseinrichtung mit einer sogenannten 'Soundkarte' zum Anschluß geeigneter Sprach-Eingabemittel - z.B. eines Mikrofons - und Sprach-Ausgabemittel - z.B. eines Lautsprechers - an die Datenverarbeitungseinrichtung voraus. Des weiteren ist an einem Teilnehmeranschluß TLNA der zweiten Anschlußeinheit ABG2 der Kommunikationsanlage PBX beispielhaft ein internes Kommunikationsendgerät KE-I angeschlossen.

Ein Anschluß der externen Datenverarbeitungseinrichtung PC-E und des externen Kommunikationsendgerätes KE-E an das ISDN-orientierte Kommunikationsnetz ISDN bzw. des internen Kommunikationsendgerätes KE-I an die Kommunikationsanlage PBX erfolgt üblicherweise über S₀-Schnittstellen oder mittels daraus abgeleiteten Schnittstellen, wie beispielsweise Uₚ₀-Schnittstellen. Allgemein umfassen eine U_{P0}- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist.

Über eine LAN-Schnittstelle LANS (Local Area Network) der Teleworking-Baugruppe HLB ist an die Kommunikationsanlage PBX zusätzlich ein lokales Rechnernetz LAN angeschlossen. Im lokalen Rechnernetz LAN sind beispielhaft mehrere interne Datenverarbeitungseinrichtungen PC-I angeordnet, wobei auf den internen Datenverarbeitungseinrichtungen PC-I analog zur externen Datenverarbeitungseinrichtung PC-E jeweils eine Telefonanwendung TA implementiert ist. Eine Übermittlung von sprachorientierten Daten über das lokale Rechnernetz LAN erfolgt dabei beispielsweise auf Basis der, auf dem bekannten TCP/IP-Protokoll (Transmission Control Protokoll / Internet Protokoll) basierenden Protokolle H.323 bzw. H.320.

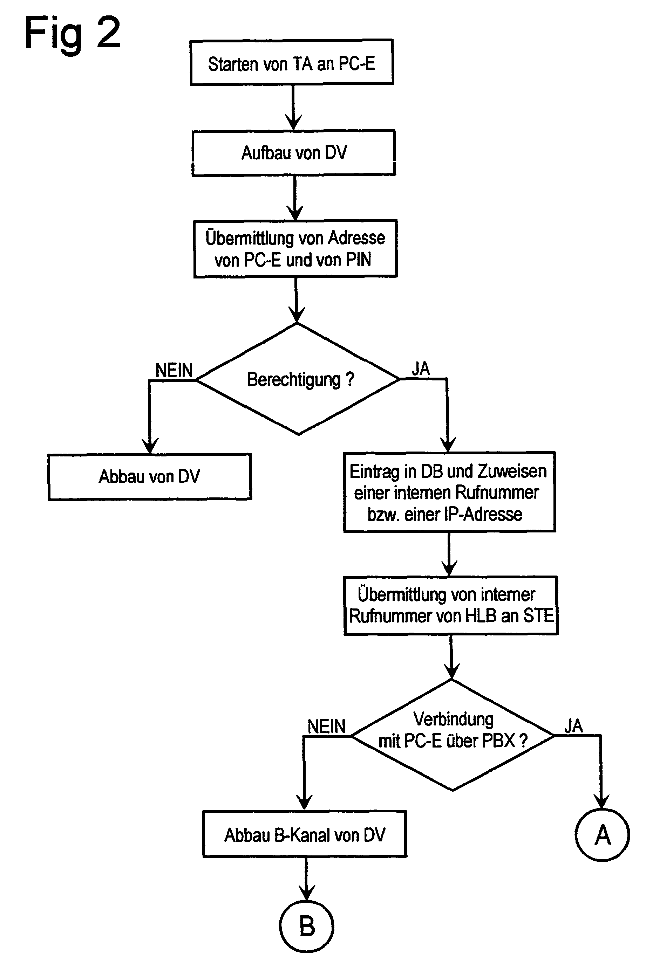

Fig. 2 zeigt ein Ablaufdiagramm zur Veranschaulichung der bei einem Anmelden der externen Datenverarbeitungseinrichtung PC-E an der Teleworking-Baugruppe HLB der Kommunikationsanlage PBX ablaufenden wesentlichen Verfahrensschritte. Startet ein Teilnehmer die Telefonanwendung TA an der externen Datenverarbeitungseinrichtung PC-E, wird in einem nächsten Schritt automatisch über mindestens einen Nutzdatenkanal (B-Kanal) der, den Anschluß der externen Datenverarbeitungseinrichtung PC-E an das ISDN-orientierte Kommunikationsnetz ISDN realisierenden S₀-Schnittstelle eine Datenverbindung DV zwischen der externen Datenverarbeitungseinrichtung PC-E und der Teleworking-Baugruppe HLB über das ISDN-orientierte Kommunikationsnetz ISDN, die erste Anschlußbaugruppe ABG1 und das Koppelfeldmodul KN aufgebaut. Die Anmeldung an der Teleworking-Baugruppe HLB der Kommunikationsanlage PBX erfolgt dabei auf einfache Weise z.B. durch Anwählen eines bestimmten internen Teilnehmeranschlußports der Kommunikationsanlage PBX.

Im Rahmen der Anmeldeprozedur der externen Datenverarbeitungseinrichtung PC-E erfolgt aus sicherheitstechnischen Gründen durch die Teleworking-Baugruppe HLB sowohl eine Identifizierungsüberprüfung der externen Datenverarbeitungseinrichtung PC-E als auch zusätzlich eine Authentifizierungsüberprüfung des, der externen Datenverarbeitungseinrichtung PC-E zugeordneten Teilnehmers. Hierzu wird für die Identifizierung die der externen Datenverarbeitungseinrichtung PC-E im ISDN-orientierten Kommunikationsnetz ISDN zugeordnete Rufnummer und zusätzlich - falls vorhanden - eine der externen Datenverarbeitungseinrichtung PC-E zugeordnete sogenannte IP-Adresse (Internet Protokoll) über einen Nutzdatenkanal (B-Kanal) der Datenverbindung DV übermittelt. Für die Authentifizierung des, der externen Datenverarbeitungseinrichtung PC-E zugeordneten Teilnehmers wird eine teilnehmerindividuelle Identifikationsnummer PIN (Private Identification Number) - alternativ auch ein teilnehmerindividuelles Paßwort - über den Nutzdatenkanal (B-Kanal) der Datenverbindung DV an die Teleworking-Baugruppe HLB der Kommunikationsanlage PBX übermittelt.

Anhand einer auf der Teleworking-Baugruppe HLB gespeicherten Datenbasis DB, welche die für das 'Teleworking' berechtigten Rufnummern bzw. IP-Adressen und teilnehmerindividuellen Identifikationsnummern PIN enthält, findet eine Überprüfung der Anmeldung der externen Datenverarbeitungseinrichtung PC-E statt. Stimmt die, der übermittelten Rufnummer bzw. IP-Adresse der externen Datenverarbeitungseinrichtung PC-E in der Datenbasis DB als zugeordnet gespeicherte teilnehmerindividuelle Identifikationsnummer PIN mit der übermittelten teilnehmerindividuellen Identifikationsnummer PIN nicht überein, ist die Anmeldung nicht bestätigt und die Datenverbindung DV zwischen der externen Datenverarbeitungseinrichtung PC-E und der Teleworking-Baugruppe HLB wird abgebaut. Zusätzlich ist in der Datenbasis DB für jede zur Anmeldung an der Teleworking-Baugruppe HLB berechtigte externe Datenverarbeitungseinrichtung PC-E bzw. externes Kommunikationsendgerät KE-E eine sogenannte Rückrufnummer gespeichert, mittels der ein Verbindungsaufbau ausgehend von der Kommunikationsanlage PBX zur jeweiligen externen Datenverarbeitungseinrichtung PC-E bzw. zum externen Kommunikationsendgerät KE-E möglich ist.

Stimmt die, der übermittelten Rufnummer bzw. IP-Adresse der externen Datenverarbeitungseinrichtung PC-E in der Datenbasis DB als zugeordnet gespeicherte teilnehmerindividuelle Identifikationsnummer PIN dagegen mit der übermittelten teilnehmerindividuellen Identifikationsnummer PIN überein, so ist die Anmeldung bestätigt und die externe Datenverarbeitungseinrichtung PC-E wird in der Datenbasis als angemeldet vermerkt. Gleichzeitig wird der externen Datenverarbeitungseinrichtung PC-E von der Teleworking-Baugruppe HLB eine kommunikationsanlagen-interne Rufnummer zugewiesen, die an die Steuereinheit STE der Kommunikationsanlage PBX übermittelt wird. Hierbei ist jeder externen Datenverarbeitungseinrichtung PC-E eine immanente kommunikationsanlagen-interne Rufnummer zugeordnet, die einer externen Datenverarbeitungseinrichtung PC-E bzw. externen Kommunikationsendgerät KE-E infolge einer Anmeldung von der Teleworking-Baugruppe HLB zugewiesen wird. Damit wird sichergestellt, daß ein externer Teilnehmer immer unter derselben Teilnehmerrufnummer erreichbar ist. Ist der externen Datenverarbeitungseinrichtung PC-E keine immanente IP-Adresse zugeordnet, so wird der externen Datenverarbeitungseinrichtung PC-E zusätzlich zur kommunikationsanlagen-internen Rufnummer eine temporäre IP-Adresse zugeordnet. Mittels der immanenten bzw. temporären IP-Adresse ist eine Datenübermittlung ausgehend von einer internen Datenverarbeitungseinrichtung PC-I zur externen Datenverarbeitungseinrichtung PC-E möglich.

Soll im folgenden eine Verbindung mit der externen Datenverarbeitungseinrichtung PC-E aufgebaut werden, d.h. wird durch ein internes oder externes Kommunikationsendgerät KE-I, KE-E die der externen Datenverarbeitungseinrichtung PC-E zugeordnete kommunikationsanlagen-internen Rufnummer angewählt oder erfolgt eine Datenübermittlung ausgehend von einer internen Datenverarbeitungseinrichtung PC-I mit der, der externen Datenverarbeitungseinrichtung PC-E zugeordneten immanenten bzw. temporären IP-Adresse als Zieladresse, so werden die zu übermittelten Daten über den Nutzdatenkanal (B-Kanal) der Datenverbindung DV an die externe Datenverarbeitungseinrichtung PC-E übermittelt. Zusätzlich werden von der Steuereinheit STE der Kommunikationsanlage PBX an die kommunikationsanlagen-interne Rufnummer zu übermittelnde endgeräteorientierte Signalisierungsinformationen über den Nutzdatenkanal (B-Kanal) der Datenverbindung DV an dir externe Datenverarbeitungseinrichtung PC-E übermittelt.

Die endgeräteorientierten Signalisierungsinformationen basieren beispielsweise auf einem kommunikationsanlagen-internen Signalisierungsprotokoll, wie es üblicherweise beim Signalisierungsaustausch zwischen internen Kommunikationsendgeräten KE-I und der Steuereinheit STE der Kommunikationsanlage PBX zur Verfügung steht. Durch die Übermittlung von, auf dem internen Signalisierungsprotokoll basierenden endgeräteorientierten Signalisierungsinformationen an die externe Datenverarbeitungseinrichtung PC-E, werden der auf der externen Datenverarbeitungseinrichtung PC-E ablaufenden Telefonanwendung TA alle von der Kommunikationsanlage PBX realisierten Leistungsmerkmale in gleicher Weise, wie einem internen Kommunikationsendgerät KE-I zur Verfügung gestellt. Eine Übermittlung von endgeräteorientierten Signalisierungsinformationen ausgehend von der externen Datenverarbeitungseinrichtung PC-E - eine Anmeldung an der Teleworking-Baugruppe HLB der Kommunikationsanlage PBX vorausgesetzt - zur Steuereinheit STE der Kommunikationsanlage PBX erfolgt in gleicher Weise in umgekehrter Richtung.

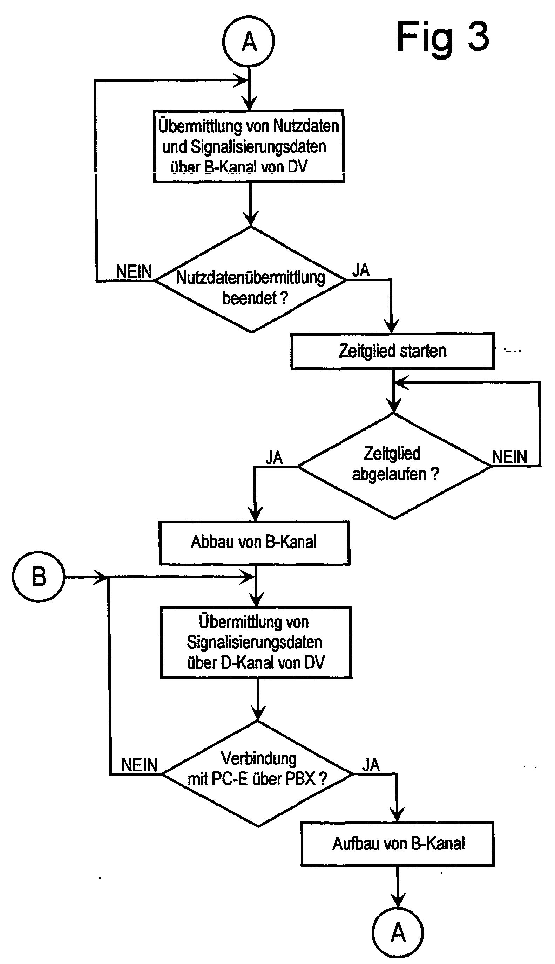

Wird innerhalb einer vorgebbaren Zeitspanne keine Verbindung mit der externen Datenverarbeitungseinrichtung PC-E über die Kommunikationsanlage PBX aufgebaut, d.h. wählt kein internes oder externes Kommunikationsendgerät KE-I, KE-E die der externen Datenverarbeitungseinrichtung PC-E zugeordnete kommunikationsanlagen-interne Rufnummer an und erfolgt auch keine Datenübermittlung ausgehend von einer internen Datenverarbeitungseinrichtung PC-I mit der, der externen Datenverarbeitungseinrichtung PC-E zugeordneten immanenten bzw. temporären IP-Adresse als Zieladresse, wird der Nutzdatenkanal (B-Kanal) der Datenverbindung DV abgebaut, d.h. die physikalische Verbindung zwischen der Kommunikationsanlage PBX und der externen Datenverarbeitungseinrichtung PC-E wird abgebaut. Durch die Speicherung der, der externen Datenverarbeitungseinrichtung PC-E betreffenden Daten, wie z.B. die kommunikationsanlagen-internen Rufnummer bzw. die immanente oder temporäre IP-Adresse in der Teleworking-Baugruppe HLB bzw. der Steuereinheit STE der Kommunikationsanlage PBX besteht jedoch weiterhin eine logische Verbindung zwischen der Kommunikationsanlage PBX und der externen Datenverarbeitungseinrichtung PC-E. Daraufhin werden im folgenden von der Steuereinheit STE der Kommunikationsanlage PBX an die kommunikationsanlagen-interne Rufnummer zu übermittelnde endgeräteorientierte Signalisierungsinformationen - wie in Fig. 3 gezeigt - mittels eines proprietären Übertragungsprotokolls über einen Signalisierungskanal (D-Kanal) der Datenverbindung DV an die externe Datenverarbeitungseinrichtung PC-E übermittelt.

Fig. 3 zeigt ein Ablaufdiagramm zur Veranschaulichung der nach dem Anmelden der externen Datenverarbeitungseinrichtung PC-E an der Teleworking-Baugruppe HLB der Kommunikationsanlage PBX ablaufenden wesentlichen Verfahrensschritte. Erfolgt innerhalb einer vorgebbaren Zeitspanne eine Verbindung mit der externen Datenverarbeitungseinrichtung PC-E über die Kommunikationsanlage PBX, so werden die im Rahmen der Verbindung zu übermittelnden Nutzdaten und endgeräteorientierten Signalisierungsinformationen wie oben bereits beschrieben über den Nutzdatenkanal (B-Kanal) der Datenverbindung DV zwischen der Kommunikationsanlage PBX und der externen Datenverarbeitungseinrichtung PC-E übermittelt.

Nach einer Beendigung der Übermittlung von Nutzdaten über den Nutzdatenkanal (B-Kanal) der Datenverbindung DV startet die Teleworking-Baugruppe HLB eine Zeitglied. Wird vor Ablauf des Zeitgliedes keine neue Verbindung mit der externen Datenverarbeitungseinrichtung PC-E über die Kommunikationsanlage PBX aufgebaut, so wird der Nutzdatenkanal (B-Kanal) der Datenverbindung DV abgebaut und die im folgenden von der Steuereinheit STE der Kommunikationsanlage PBX an die kommunikationsanlagen-interne Rufnummer zu übermittelnden endgeräteorientierten Signalisierungsinformationen werden über den Signalisierungskanal (D-Kanal) der Datenverbindung DV an die externe Datenverarbeitungseinrichtung PC-E übermittelt. Aufgrund der geringen benötigten Bandbreite der zu übermittelnden endgeräteorientierten Signalisierungsinformationen reicht die durch den Signalisierungskanal (D-Kanal) bereitgestellte geringere Bandbreite von 16 kBit/s für eine Übertragung der endgeräteorientierten Signalisierungsinformationen aus. Ein Vorteil der Übermittlung der endgeräteorientierten Signalisierungsinformationen über den Signalisierungskanal (D-Kanal) besteht ferner darin, daß für eine Datenübermittlung über den Signalisierungskanal (D-Kanal) keine Gebühren anfallen.

Eine Übermittlung der endgeräteorientierten Signalisierungsinformationen über den Signalisierungskanal (D-Kanal) der Datenverbindung DV erfolgt solange, bis eine neue Verbindung mit der externen Datenverarbeitungseinrichtung PC-E über die Kommunikationsanlage PBX aufzubauen ist. Infolge der neu aufzubauenden Sprachverbindung wird mindestens ein Nutzdatenkanal (B-Kanal) der Datenverbindung DV erneut aufgebaut und die im Rahmen der Verbindung zu übermittelnden Nutzdaten und endgeräteorientierten Signalisierungsinformationen werden in herkömmlicher Weise über den Nutzdatenkanal (B-Kanal) der Datenverbindung DV zwischen der Kommunikationsanlage PBX und der externen Datenverarbeitungseinrichtung PC-E übermittelt.

Eine Übermittlung der endgeräteorientierten Signalisierungsinformationen von der Steuereinheit STE der Kommunikationsanlage PBX zur externen Datenverarbeitungseinrichtung PC-E über den Signalisierungskanal (D-Kanal) der Datenverbindung DV erfolgt bis zu einem, z.B. durch das Schließen der Telefonanwendung TA an der externen Datenverarbeitungseinrichtung PC-E erfolgenden Abmelden der externen Datenverarbeitungseinrichtung PC-E an der Teleworking-Baugruppe HLB der Kommunikationsanlage PBX. Infolge des Abmeldens des externen Datenverarbeitungseinrichtung PC-E an der Kommunikationsanlage PBX wird der, der externen Datenverarbeitungseinrichtung PC-E bezeichnenden Anmeldeverweis aus der Datenbasis DB der Teleworking-Baugruppe DB gelöscht und die der externen Datenverarbeitungseinrichtung PC-E eventuell zugeordnete temporäre IP-Adresse wird freigegeben, so daß diese für eine Anmeldung einer anderen externen Datenverarbeitungseinrichtung oder eines anderen externen Kommunikationsendgerätes an der Kommunikationsanlage PBX zur Verfügung steht.

## Patentansprüche

1. Verfahren zum Bereitstellen von durch eine Kommunikationsanlage (PBX) realisierten und an internen Teilnehmeranschlüssen verfügbaren Leistungsmerkmalen über ein Kommunikationsnetz (ISDN) an einem externen Kommunikationsendgerät (PC-E),
wobei durch ein Anmelden des externen Kommunikationsendgerätes (PC-E) an der Kommunikationsanlage (PBX) eine Verbindung (DV) zwischen dem externen Kommunikationsendgerät (PC-E) und der Kommunikationsanlage (PBX) eingerichtet wird,
wobei zwischen dem externen Kommunikationsendgerät (PC-E) und der Kommunikationsanlage (PBX) zu übermittelnde Nutzdaten und zu übermittelnde endgeräteorientierte Signalisierungsinformationen, wie sie üblicherweise im Rahmen eines Signalisierungsprotokolls zwischen internen Kommunikationsendgeräten und der Kommunikationsanlage (PBX) zur Verfügung stehen, über mindestens einen Nutzdatenkanal der Verbindung (DV) übermittelt werden, und
wobei nach einer Beendigung einer Nutzdatenübermittlung zu übermittelnde endgeräteorientierte Signalisierungsinformationen mittels eines proprietären Übertragungsprotokolls über einen Signalisierungskanal der Verbindung (DV) übermittelt werden.

2. Verfahren nach Anspruch 1,
**dadurch gekennzeichnet,**
**daß** der mindestens eine Nutzdatenkanal der Verbindung (DV) nach Ablauf einer einstellbaren Zeitspanne nach Beendigung der Nutzdatenübermittlung abgebaut wird.

3. Verfahren nach Anspruch 1 oder 2,
**dadurch gekennzeichnet,**
**daß** die Verbindung (DV) zwischen dem externen Kommunikationsendgerät (PC-E) und einer, in der Kommunikationsanlage (PBX) angeordneten, als Teilnehmeranschlußbaugruppe ausgestalteten Baugruppe (HLB) aufgebaut wird.

4. Verfahren nach Anspruch 3,
**dadurch gekennzeichnet,**
**daß** die Kommunikationsanlage (PBX) über die Baugruppe (HLB) an ein lokales Rechnernetz (LAN) anschließbar ist.

5. Verfahren nach Anspruch 3 oder 4,
**dadurch gekennzeichnet,**
**daß** durch die Baugruppe (HLB) anhand von teilnehmerbezogenen Daten, die vom externen Kommunikationsendgerät (PC-E) über die Verbindung (DV) an die Baugruppe (HLB) übermittelt werden, eine Berechtigung zum Anmelden überprüft wird.

6. Verfahren nach Anspruch 5,
**dadurch gekennzeichnet,**
**daß** die teilnehmerbezogenen Daten eine teilnehmerindividuelle Identifikationsnummer (PIN) und/oder ein teilnehmerindividuelles Paßwort umfassen.

7. Verfahren nach einem der Ansprüche 3 bis 6,
**dadurch gekennzeichnet,**
**daß** im Zuge einer Anmeldung dem externen Kommunikationsendgerät (PC-E) von der Baugruppe (HLB) eine kommunikationsanlagen-interne Rufnummer zugewiesen wird, wobei endgeräteorientierte Signalisierungsinformationen, die von einer Steuereinheit (STE) der Kommunikationsanlage (PBX) an die kommunikationsanlagen-interne Rufnummer gerichtet sind, an das externe Kommunikationsendgerät (PC-E) umgeleitet werden.

8. Verfahren nach Anspruch 7,
**dadurch gekennzeichnet,**
**daß** dem externen Kommunikationsendgerät (PC-E) bei jeder erfolgenden Anmeldung die gleiche kommunikationsanlagen-interne Rufnummer zugewiesen wird.

9. Verfahren nach einem der Ansprüche 3 bis 8,
**dadurch gekennzeichnet,**
**daß** durch die Baugruppe (HLB) gleichzeitig mehrere Endgeräteverbindungen zwischen jeweils einem an der Kommunikationsanlage (PBX) angemeldeten externen Kommunikationsendgerät (PC-E) und einem weiteren Kommunikationsendgerät (PC-I, KE-I) einrichtbar sind.

10. Verfahren nach einem der vorhergehenden Ansprüche,
**dadurch gekennzeichnet,**
**daß** das externe Kommunikationsendgerät (PC-E) über ein ISDN-orientiertes Kommunikationsnetz mit der Kommunikationsanlage (PBX) verbunden ist.

11. Verfahren nach Anspruch 10,
**dadurch gekennzeichnet,**
**daß** der Signalisierungskanal der Verbindung (DV) durch einen ISDN-orientierten D-Kanal und der Nutzdatenkanal der Verbindung (DV) durch mindestens einen ISDN-orientierten B-Kanal gebildet sind.

12. Verfahren nach einem der vorhergehenden Ansprüche,
**dadurch gekennzeichnet,**
**daß** das externe Kommunikationsendgerät (PC-E) eine Datenverarbeitungseinrichtung mit einer auf der Datenverarbeitungseinrichtung ablaufenden, in Software implementierten Telefonanwendung (TA) ist.

## Claims

1. Method for providing service features implemented by a PBX system (PBX) and available on internal subscriber connections via a communications network (ISDN) on an external communications terminal (PC-E),
whereby, through a login of the external communications terminal (PC-E) on the PBX system (PBX), a connection (DV) is set up between the external communications terminal (PC-E) and the PBX system (PBX),
whereby user data to be transmitted between the external communications terminal (PC-E) and the PBX system (PBX) and terminal-oriented signalling information to be transmitted, of the type normally provided in a signalling protocol between internal communications terminals and the PBX system (PBX), are transmitted via at least one user data channel of the connection (DV), and
whereby, at the end of a user data transmission, terminal-oriented signalling information to be transmitted is transmitted by means of a proprietary transmission protocol via a signalling channel of the connection (DV).

2. Method according to Claim 1,
**characterized in that**
the at least one user data channel of the connection (DV) is cleared down at the end of a definable time span on completion of the user data transmission.

3. Method according to Claim 1 or 2,
**characterized in that**
the connection (DV) is set up between the external communications terminal (PC-E) and a module (HLB) arranged in the PBX system (PBX) and designed as a subscriber line module.

4. Method according to Claim 3,
**characterized in that**
the PBX system (PBX) can be connected via the module (HLB) to a local computer network (LAN).

5. Method according to Claim 3 or 4,
**characterized in that**
a login authorization is checked by the module (HLB) using subscriber-related data which are transmitted from the external communications terminal (PC-E) via the connection (DV) to the module (HLB).

6. Method according to Claim 5,
**characterized in that**
the subscriber-related data comprise a subscriber-individual identification number (PIN) and/or a subscriber-individual password.

7. Method according to one of Claims 3 to 6,
**characterized in that**,
during a login, a PBX-system-internal telephone number is allocated by the module (HLB) to the external communications terminal (PC-E), whereby terminal-oriented signalling information which is sent by a control unit STE of the PBX system (PBX) to the PBX-system-internal telephone number is diverted to the external communications terminal (PC-E).

8. Method according to Claim 7,
**characterized in that**
the same PBX-system-internal telephone number is allocated to the external communications terminal (PC-E) during each login operation.

9. Method according to one of Claims 3 to 8,
**characterized in that**
a plurality of terminal connections can be set up simultaneously by the module (HLB) in each case between an external communications terminal (PC-E) logged in on the PBX system (PBX) and a further communications terminal (PC-I, KE-I) .

10. Method according to one of the preceding claims,
**characterized in that**
the external communications terminal (PC-E) is connected via an ISDN-oriented communications network to the PBX system (PBX).

11. Method according to Claim 10,
**characterized in that**
the signalling channel of the connection (DV) is formed by an ISDN-oriented D-channel, and the user data channel of the connection (DV) is formed by at least one ISDN-oriented B-channel.

12. Method according to one of the preceding claims,
**characterized in that**
the external communications terminal (PC-E) is a data processing device with a telephone application (TA) implemented in software and running on the data processing device.

## Revendications

1. Procédé de fourniture de fonctionnalités réalisées par une installation de communication (PBX) et disponibles sur des raccordements d'abonnés internes par l'intermédiaire d'un réseau de communication (RNIS) à un terminal de communication externe (PC-E),
dans lequel une liaison (DV) entre le terminal de communication externe (PC-E) et l'installation de communication (PBX) est établie par une connexion du terminal de communication externe (PC-E) à l'installation de communication (PBX),
dans lequel des données utiles à transmettre entre le terminal de communication externe (PC-E) et l'installation de communication (PBX) et des informations de signalisation orientées terminal à transmettre de même, telles celles disponibles généralement dans le cadre d'un protocole de signalisation entre des terminaux de communication internes et l'installation de communication (PBX), sont transmises par l'intermédiaire d'au moins un canal de données utiles de la liaison (DV), et
dans lequel des informations de signalisation orientées terminal à transmettre après la fin d'une transmission de données utiles sont transmises au moyen d'un protocole de transmission propriétaire par l'intermédiaire d'un canal de signalisation de la liaison (DV).

2. Procédé selon la revendication 1,
**caractérisé par le fait que** le ou les canaux de données utiles de la liaison (DV) sont libérés après l'expiration d'un intervalle de temps réglable après la fin de la transmission de données utiles.

3. Procédé selon la revendication 1 ou 2,
**caractérisé par le fait que** la liaison (DV) est établie entre le terminal de communication externe (PC-E) et un module (HLB) placé dans l'installation de communication (PBX) et conçu comme un module de raccordement d'abonné.

4. Procédé selon la revendication 3,
**caractérisé par le fait que** l'installation de communication (PBX) peut être raccordée par l'intermédiaire du module (HLB) à un réseau informatique local (LAN).

5. Procédé selon la revendication 3 ou 4,
**caractérisé par le fait qu'**une autorisation pour la connexion est vérifiée par le module (HLB) à l'aide de données qui sont relatives à l'abonné et qui sont transmises par le terminal de communication externe (PC-E) au module (HLB) par l'intermédiaire de la liaison (DV).

6. Procédé selon la revendication 5,
**caractérisé par le fait que** les données relatives à l'abonné comprennent un numéro d'identification (PIN) propre à l'abonné et/ou un mot de passe propre à l'abonné.

7. Procédé selon l'une des revendications 3 à 6,
**caractérisé par le fait que**, au cours d'une connexion, un numéro d'appel interne à l'installation de communication est attribué au terminal de communication externe (PC-E) par le module (HLB), des informations de signalisation orientées terminal qui sont adressées par une unité de commande (STE) de l'installation de communication (PBX) au numéro d'appel interne à l'installation de communication étant réacheminées vers le terminal de communication externe (PC-E).

8. Procédé selon la revendication 7,
**caractérisé par le fait que**, à chaque connexion effectuée, le même numéro d'appel interne à l'installation de communication est attribué au terminal de communication externe (PC-E).

9. Procédé selon l'une des revendications 3 à 8,
**caractérisé par le fait que** plusieurs liaisons de terminaux peuvent être établies simultanément par le module (HLB) entre à chaque fois un terminal de communication externe (PC-E) connecté à l'installation de communication (PBX) et un autre terminal de communication (PC-I, KE-I).

10. Procédé selon l'une des revendications précédentes,
**caractérisé par le fait que** le terminal de communication externe (PC-E) est relié à l'installation de communication (PBX) par l'intermédiaire d'un réseau de communication orienté RNIS.

11. Procédé selon la revendication 10,
**caractérisé par le fait que** le canal de signalisation de la liaison (DV) est formé par un canal D orienté RNIS et le canal de données utiles de la liaison (DV) est formé par au moins un canal B orienté RNIS.

12. Procédé selon l'une des revendications précédentes,
**caractérisé par le fait que** le terminal de communication externe (PC-E) est un ordinateur avec une application téléphonique (TA) mise en oeuvre sous forme de logiciel et tournant sur l'ordinateur.
